(19) Europäisches Patentamt
European Patent Office
Office européen des brevets

(11) EP 2 065 118 A1

(12) **EUROPEAN PATENT APPLICATION**

(43) Date of publication:
03.06.2009 Bulletin 2009/23

(51) Int Cl.:
*B23K 26/32* (2006.01)    *B23K 33/00* (2006.01)
*B23K 103/04* (2006.01)    *B23K 103/06* (2006.01)

(21) Application number: 08170082.5

(22) Date of filing: 27.11.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 29.11.2007 US 987316

(71) Applicant: Global Nuclear Fuel-Americas, LLC
Wilmington,
North Carolina 28401 (US)

(72) Inventors:
• Smith, David Grey
Leland, NC 28451 (US)

• Longren, Richard C.
Wilmington, NC 28411 (US)
• Luciano, Gerald A.
Wilmington, NC 28411 (US)
• Studer, Stephen J.
Wilmington, NC 28411 (US)

(74) Representative: Gray, Thomas
GE International Inc.
London Patent Operation
15 John Adam Street
London WC2N 6LU (GB)

(54) **Laser welding of castings to minimize distortion**

(57) A process of using laser welding in the assembly of boiling water reactor fuel debris filters is disclosed. The laser welding process minimizes the distortion of the debris filter cast lower tie plate 14 by applying minimal heat during the welding. Fixture 52 holds the cast lower tie plate 14 through four degrees of motion under a constant controlled laser source 75 during welding. The welding process also reduces the potential for stress corrosion cracking resulting from crevices 41 and 43 in partial penetration welds 44 and 46 that might occur in a laser welding process.

Fig. 14

**Description**

The present invention relates to welding, and more particularly, to the combination of laser welding, special fixturing, the machined geometries and various methods being employed, to minimize the distortion of cast components as a result of the welding process. The invention minimizes the distortion of cast components and permits a change in the standard assembly sequence of machine, weld, machine again and clean to machine, clean, and finish weld components.

BACKGROUND OF THE INVENTION

Over the years, the nuclear power industry has seen dramatic improvements in fuel designs. At present, there is a greater expectation that fuel will operate without failures. Some of the most common nuclear fuel failure mechanisms include: (1) debris fretting, (2) cladding corrosion, (3) pellet cladding interaction, and (4) failure due to manufacturing defects. One device that is used to prevent debris fretting is a Generation III Defender debris filter, which prevents the entry of debris into a nuclear reactor's fuel bundle, a problem that has previously caused fuel failures in reactors. The Defender debris filter is used in the BWR fleet, a series of boiling water nuclear reactors operating in the United States, Mexico, Japan, India, and several European countries.
Gas tungsten arc welding, also known as tungsten inert gas ("TIG") welding, is an arc welding process that uses a non-consumable tungsten electrode to produce a weld. The weld area is protected from atmospheric contamination by a shielding gas, such as the inert gas argon. A filler metal is typically used, though some welds do not require it. A constant current welding power supply 55 produces energy, which is conducted across an arc through a column of highly ionized gas and metal vapors called plasma.
TIG welding is commonly used to weld thin sections of stainless steel and light metals, such as aluminum, magnesium and copper alloys. TIG welding allows for stronger, higher quality welds; however, the process is complex and significantly slower than other welding techniques. TIG welding is also used to weld cast plates, such as stainless steel cast surfaces. However, the process can create excessive distortion in such cast plates due to the heat generated in the welding process. TIG welding has been used is in the manufacture of BWR fuel assembly lower tie plates. One of the difficulties with the use of TIG welding of cast components like the lower tie plates has been the distortion encountered when welding cast halves or machined components together in an assembly process. The distortion encountered is typically extreme enough to require final machining of the component due to the distortion.

BRIEF DESCRIPTION OF THE INVENTION

The present invention is directed to the use of laser welding to minimize distortion on cast stainless steel components as a result of welding. More specifically, the present invention is directed to the process of using laser welding in the assembly of boiling water reactor fuel debris filters, such as the Defender debris filter. The laser welding process minimizes the distortion of pre-machined cast surfaces on the Defender debris filter lower tie plate by applying minimal heat during the welding of a cover plate to the lower tie plate.
During the laser welding process, a laser beam is applied symmetrically about a centerline between weld flanges on the cover plate and the lower tie plate. This concentration of light energy at the centerline between the cover plate weld flanges and the lower tie plate generates heat that is conducted within the joint formed between the cover plate and the lower tie plate, causing the metals from which the plates are formed to change from a solid state, into a liquid state of molten metal, and thereby, combine the centerline between the weld flanges on the cover plate and the lower tie plate. After the centerline of the two metal plates change back into a solid state, the two plates are then said to be welded together so as to form a butt welded joint between the cover plate and the lower tie plate.
The welding process of the present invention utilizes a fixture designed to hold the debris filter lower tie plate through four degrees of motion under a fixed focused laser source during welding. Applying laser welding in the assembly of the lower tie plate minimizes distortion during the process of installing the debris filter within the pre-machined cast lower tie plate. The application of the laser weld subsequent to final machining of components provides a finished product that differs from typical high heat (Energy) input techniques (TIG). The techniques differ by; 1) no further machining of areas distorted by welding, 2) debris free cleaning, ensuring the exclusion of foreign material, and 3) resulting weldment geometry designed to minimize the concern of stress corrosion cracking.
The present invention is also directed to the reduction of stress corrosion cracking resulting from crevices in partial penetration welds that might occur in the laser welding process. A specified minimum weld penetration along with reliefs behind the cover plate weld flange geometry, are intended to eliminate any possibility of cervices being created during the welding process at the interface between the cover plate and the lower tie plate. The resistance of the Defender weldment to stress corrosion cracking is preserved if the depth of weld penetration is equal to or greater than 70% of the weld joint.

## BRIEF DESCRIPTION OF THE DRAWINGS

There follows a detailed description of embodiments of the invention, by way of example only, with reference to the accompanying drawings, in which:

FIGURE 1 is a perspective view of the principal components to be joined together and the overall layout of the Defender debris filter lower tie plate assembly;

Figure 2 is a front elevation view of the debris filter lower tie plate, showing the cover plate attached to the lower tie plate and the location of the laser welds used to attach the cover plate to the lower tie plate;

Figure 3 is a front view showing the locations of the tack welds used to hold the cover plate to the lower tie plate prior to laser welding the cover plate to the lower tie plate;

Figure 4 is a drawing of a tack weld station including a fixture for compressing the filter while holding the cover plate on the lower tie plate for purposes of tack welding the cover plate to the lower tie plate;

Figure 5A is a drawing of the laser power supply and controls which provides laser power to the tie plate weld station;

Figure 5B is a drawing of the laser weld station used to weld the cover plate to the lower tie plate;

Figure 6 is a picture of a tie plate pre-weld location with jog Z & Y crosshairs placed in a start position for the laser welding of the cover plate to the lower tie plate;

Figure 7 is a drawing of a fixture for holding the lower tie plate through four degrees of axis motion in front of a focused laser source;

Figure 8A is a schematic cross-sectional end view of the cover plate and lower tie plate weld joints showing the top and the bottom joints;

Figure 8B is another schematic cross-sectional view of weld joints at one end of the cover plate and the lower tie plate;

Figure 9A is a top-down, rear perspective view of the cover plate showing weld surfaces and weld reliefs;

Figure 9B is a bottom-down rear perspective view of the cover plate showing weld surfaces and weld reliefs;

FIGURE 10 is a perspective view of the lower tie plate showing weld surfaces in the opening through which a defender debris filter assembly is inserted;

Figure 11A is a metallographic cross section from the top horizontal weld joint;

Figure 11B is a metallographic cross section from the bottom horizontal weld joint;

Figure 12 is a metallographic cross section showing mechanical loading by the debris filter once compressed within the cavity of the lower tie plate;

Figure 13 is a graph showing stress intensity in cover plate welds relative to penetration of the weld; and

Figure 14 is a drawing showing the horizontal and vertical weld joint configurations for welding the cover plate to the lower tie plate.

## DETAILED DESCRIPTION OF THE INVENTION

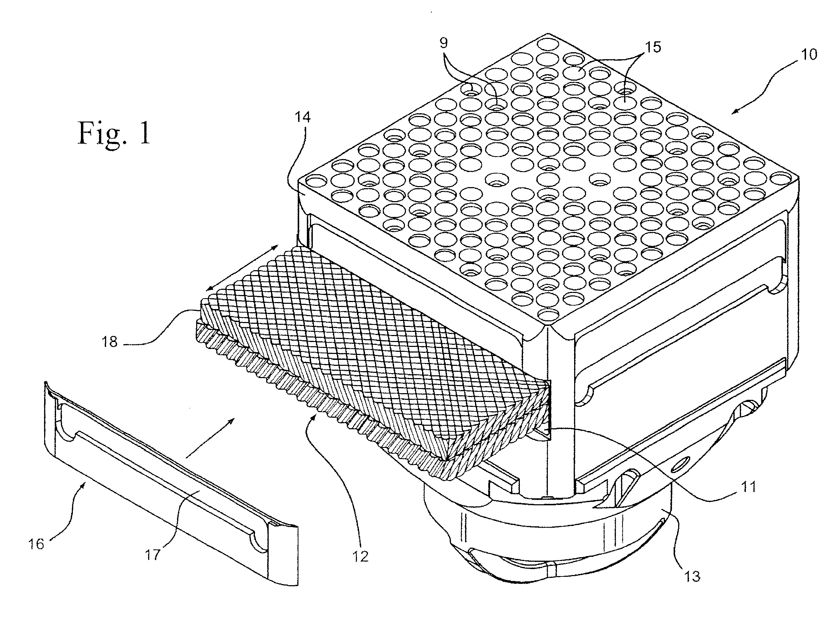

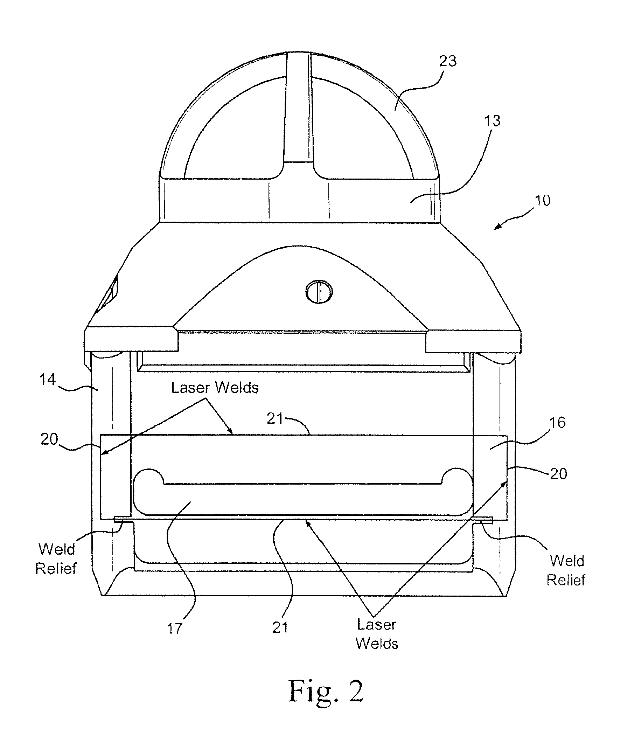

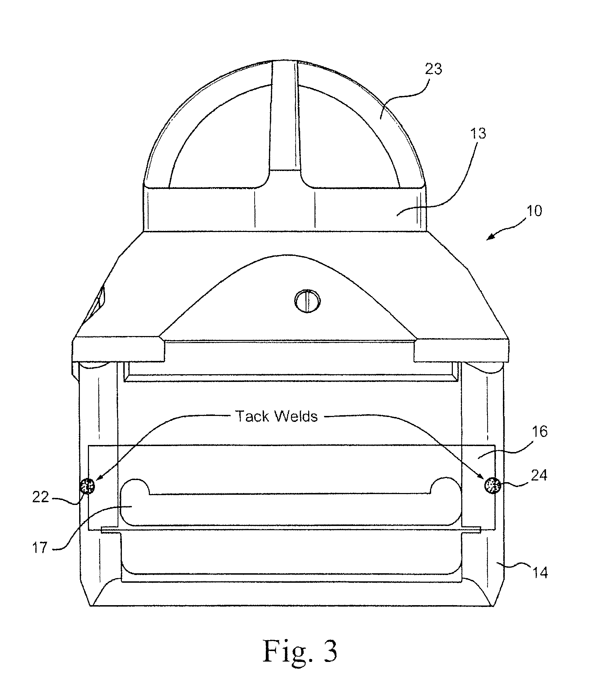

Figure 1 is a perspective view of the various components that make-up a Defender debris filter lower tie plate assembly 10. The Defender debris filter lower tie plate assembly 10 consists of a machined lower tie plate 14 with a machined cast inlet 13, a filter plate assembly 12 inserted into a rectangular cavity 25 within lower tie plate 14, and a cover plate 16 that is welded to lower tie plate 14. The cover plate 16 includes a finger spring pocket 17. The lower tie plate 14 includes a plurality of fluid flow holes 15 and nuclear fuel pin holes 9, with an opening 11 in one of its sides, through which the filter plate assembly 12 is inserted into the rectangular pocket 25 within lower tie plate 14. The filter plate assembly 12 is a rectangular assembly comprised of a plurality of wavy stainless steel plates 18 welded together. Filter plate assembly 12 must be compressed slightly when installed within the lower tie plate 14 to prevent flow-induced vibration during reactor operations. The cover plate 16 retains the filter plate assembly 12 within the lower tie plate 14 and prevents coolant leakage from being diverted from the reactor's fuel bundle, after the welding process that seals the cover plate 16 to the lower tie plate 14. The cover plate 16 is welded to lower tie plate 14 along two vertical weld joints 20 and two horizontal weld joints 21 extending around the perimeter of the cover plate 16, as shown in Figure 2. After the filter plate assembly 12 is inserted into tie plate 14, cover plate 16 is fitted over the opening 11 leading to rectangular cavity 25 and tack welded preferably at two locations 22 and 24 shown in Figure 3, although it should be understood that more than two tack welds can be used, if desired. The tack welds 22 and 24 are made as small as possible by developed parameters, while retaining the filter plate assembly 12 under compression within the lower tie plate 14, but with enough strength to hold the cover plate 16 in position with respect to the lower tie plate 14 for subsequent laser welding. The tack welds 22 and 24 are fully consumed during the subsequent laser welding process. It should be noted that the tack welds are made using the TIG process. The tacks are made utilizing a precision power supply 55 noted for its stable arc starting capabilities, for producing a strong, low heat input, yet small profile tack weld, as needed for this application.

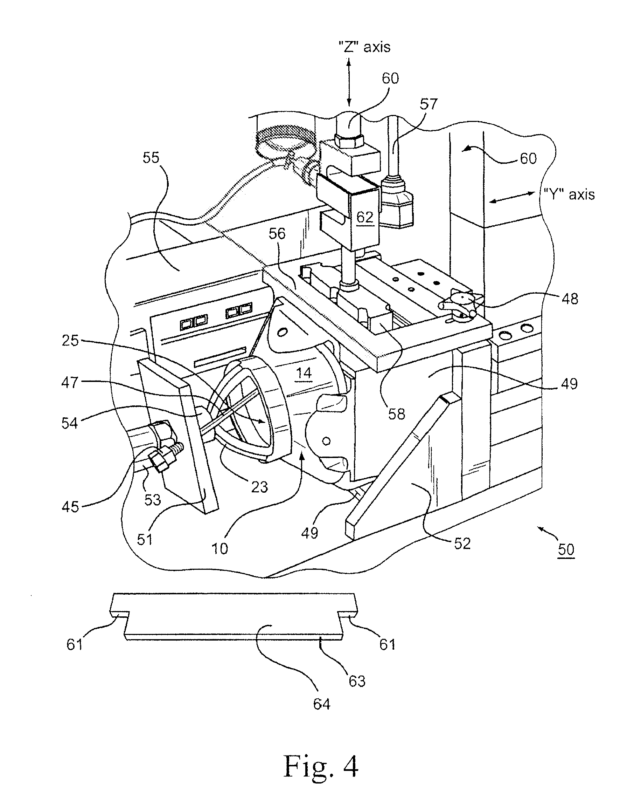

Figure 4 shows a tie plate tack welding station 50 for tack welding the cover plate 16 to the lower tie plate 14. The tie plate tack welding station 50 is a foreign material exclusion control area designed to minimize the intrusion of foreign materials into the lower tie plate's inner cavity 25. Tack welding station 50 includes a digital TIG tack welding power supply 55, a manual loading and unloading clamp / ram 53, that has a poly insulator 54 that retains the inlet end 23 of the lower tie plate 14 when clamped within the tack welding station 50. Attached between the loading and unloading clamp 53 and the poly insulator 54 is the support plate 51 with a push rod 47 attached by a locking device 45. A copper chill block 49 attached to a tie plate fixture 52, that's affixed upon a manual arbor press 60 that's adjustable in the "Y" axis and load cell / sensor 62 that's adjustable in the "Z" axis, that's to be used with an alignment tool 64.

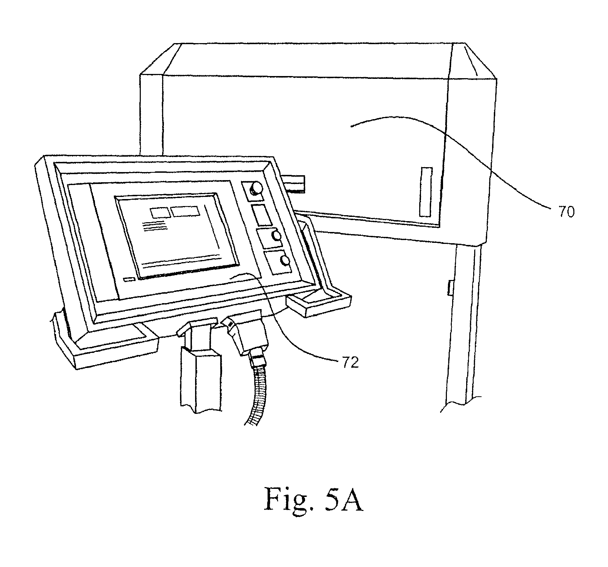

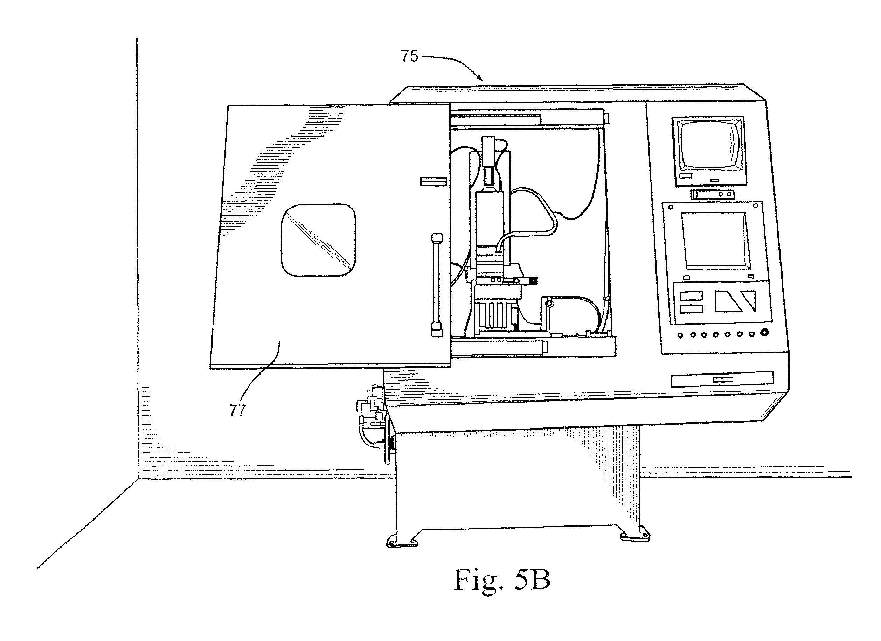

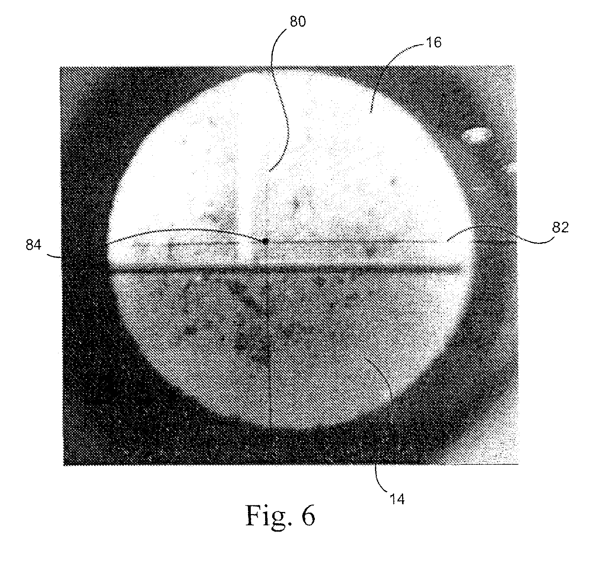

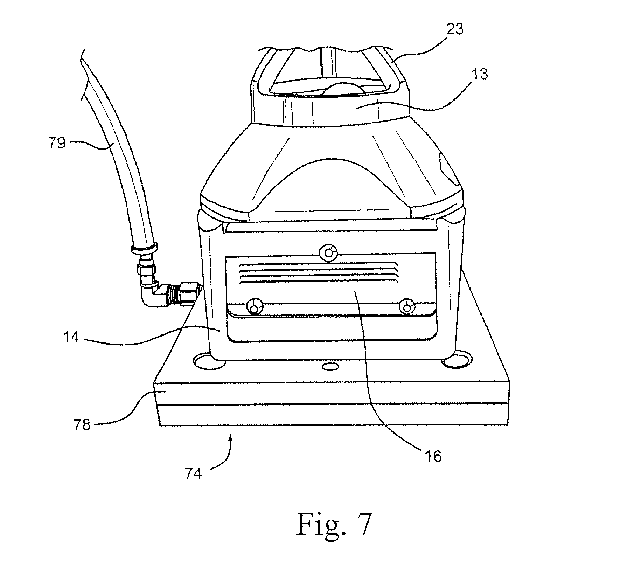

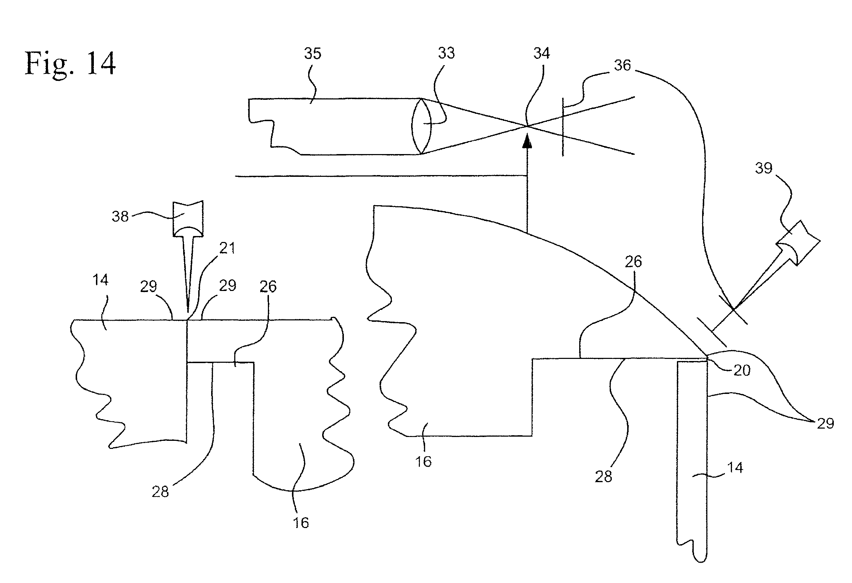

Prior to welding the weld joints between the cover plate 16 and the lower tie plate 14 are wiped with acetone or alcohol to ensure all the components a clean and contaminate free, including all work surfaces. The filter plate assembly 12 is orientated into the lower tie plate's cavity 25 and then placed into the tack weld station 50. The copper chill block 49 that faces the lower tie plate 14 base, contains several precise locating pins that are made to fit snug into either the nuclear fuel pin holes 9 and/or the fuel flow holes 15 that are located on the surface base 31 of the lower tie plate 14. Copper chill block 49 has a negative grounding cable that's attached from the Digital TIG tack welding power supply 55. The lower tie plate 14 is then clamped into the copper chill block 49 by the manual loading and unloading clamp / ram 53. The filter plate assembly 12 is inserted into the lower tie plate cavity 25 until it bottoms on the opposite wall. The preferred orientation of the filter assembly 12 within the lower tie plate cavity 25 utilizes the compressive nature of the filter assembly 12. The push rod 47 locates the filter 12 and seats the filter within the inner cavity 25. The push rod is locked in place using locking device 45 to avoid filter 12 slippage and proper engagement of cover plate wedge 37. Thereafter, a fixture guide plate 56 is installed and held in place by the two palm-grip hand knobs 48, that are attached to the top side of the lower tie plate fixture 52. Once the fixture guide plate 56 is aligned with an edge of the tie plate's rectangular cavity 25/opening 11, an alignment tool 64 is then used to set a cover plate clamp 58 a predetermined distance from the guide face edge. Preferably, this distance is approximately 010". Alignment tool 64 is placed on edge against the inner front surface of the fixture guide plate 56, with the two palm-grip hand knobs 48 remaining loose enough for final adjustment of cover plate 16 gap clearance. Alignment tool 64 surface "A" 63 will come to rest upon horizontal weld surface 19 within cavity/opening 11, while surfaces "B" 61 of the alignment tool 64 will come to rest upon the top surface of the fixture guide plate 56. The alignment tool 64 is pulled against the inner surface of the fixture guide plate 56 and tightened into a final position by the two palm grip hand knobs 48. The cover plate 16 is then installed and compressed with a manual arbor press 60 by way of the arbor press handle 57. Before seating the cover plate 16, a minimum force of 30 lbs must be indicated by the load cell 62. The cover plate 16 is fully seated with additional arbor press force to minimize gap between the cover plate 16 and the tie plate 14 and to seat the cover plate 16 completely. If the load sensor 62 located on the "Z" axis reads above 30 pounds, but less than 1,000 pounds, the amount of force being used to compress the filter assembly 12 is within an acceptable range. Once cover plate 16 has been seated, the guide plate 56 is removed and the cover plate 16 is visually inspected to ensure that it is properly seated. If necessary, a small rubber mallet can be used with light taps to re-center the cover plate 16 in the lower tie plate 14 rectangular cavity /opening 11. Preferably, the maximum gap between the cover plate 16 and the lower tie plate 14 is .010" with a maximum gap on the two vertical joints 20 at 0.003". While maintaining a load on the cover plate 16 and filter 12 with the arbor press 60 the final position of the filter 12 is inspected for proper positioning below the cover plate wedge 37. Once this determination is made, two light tack welds 22 and 24 are made, as shown in Figure 3. After tack welding, the lower tie plate assembly 10 is checked for overall final dimensions prior to laser welding using an envelope gage. The welding station Figure 5B where cover plate 16 is laser welded to lower tie plate 14 is a foreign material exclusion control area. Typically, the laser welding system, in addition to the laser system 75, would include a power supply 70, a master control panel 72, a main laser power switch (not shown), heat controls (not shown) and a chiller control (not shown). There would also be a computer switch (not shown) that controls the operation of the laser system 75. In a typical welding procedure, the main power switch for the laser is turned on and then the laser que switch at the laser is also turned on. The laser control panel 72 is turned to a CNC mode. CNC is the computer numerical control that is used to control the power output and path of the laser. The chiller and heating control switches are then turned on, as are the main power switch to the lower tie plate welder and the computer is turned on. Thereafter, air, helium, vacuum (not shown) and water circulator (not shown) are turned on and a check is done to ensure that the laser lens 33 (Figure 14) of laser welding system 75 is in the center of its focus range. A program for operating the laser welding system 75 is then loaded. The lower tie plate 14 and cover 16 are positioned inside of the laser welding system 75, whereupon the laser system 75 door 77 is closed and a switch is actuated to move the tie plate 14 and cover 16 to a pre-weld location. As shown in Figure 6, jog Z&Y crosshairs 80 and 82 are placed in a start position 84 between plates 14 and 16 and a verification is run prior to starting the laser welding sequence. After path verification, the weld sequence is started, during which a fixture 74, shown in Figure 7, which holds lower tie plate 14, is moved to facilitate the welding of the cover plate 16 to the tie plate 14. A back purging gas line 79 is attached to the copper chill block 78 that has several precise locating pins attached, that are made to provide a slip fit into either the nuclear fuel pin holes 9 and/or the fuel flow holes 15, that are located on the surface base 31 of the lower tie plate 14. The purge gas insures that the inner welded surfaces of the lower tie plate 14 are not contaminated during the laser welding operation when full penetration is meet. The fixture 74 is designed to hold lower tie plate 14 through four degrees of motion under a collimated laser beam 35 (Figure 14) within laser system 75 during the welding of cover plate 16 to lower tie plate 14.

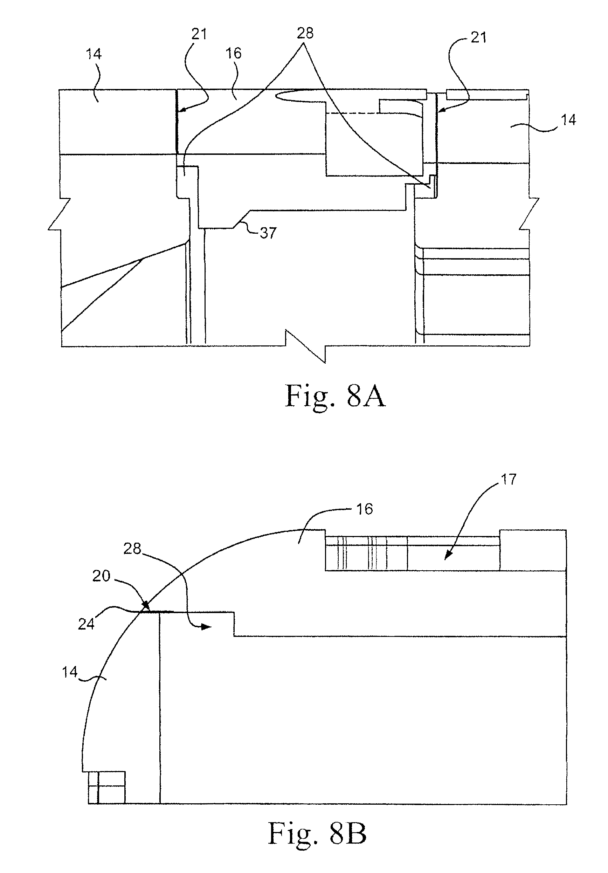

The locations and configurations of the welded butt joints are shown in Figures 2, 8A and 8B of the present application. Figure 2 is a front elevation view of the debris filter lower tie plate assembly 10 showing cover plate 16 attached to lower tie plate 14 and the location of the laser welds 20 and 21 used to attach cover plate 16 to tie plate 14. As shown in Figure 2, cover plate 16 is welded to lower tie plate 14 along two vertical weld joints 20 and two horizontal weld joints 21 extending around the perimeter of the cover plate 16.

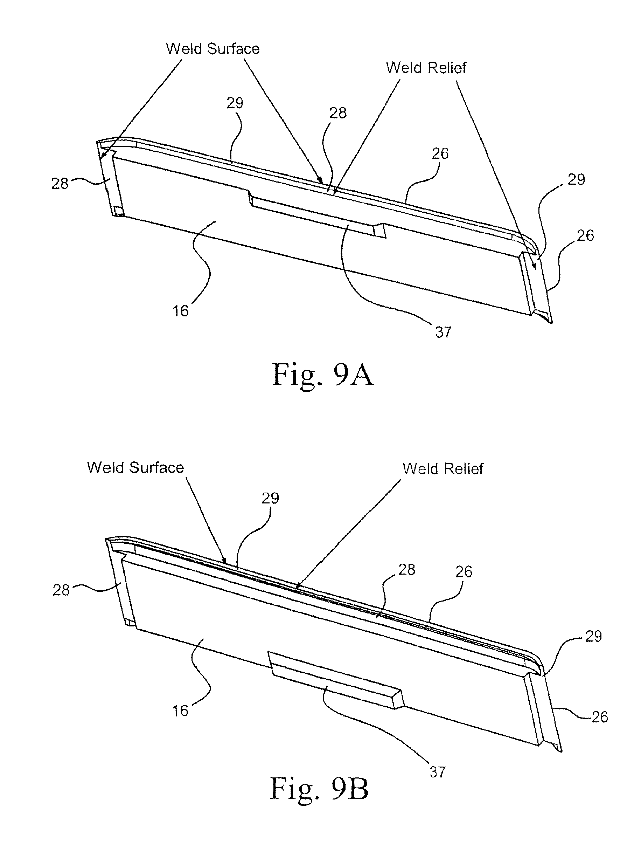

Figure 8A is a schematic view of horizontal weld joints 21 at the top and the bottom of cover plate 16, along with reliefs 28 behind weld flanges 26 (Figures 9A & 9B). Figure 8B is another schematic view of one of the vertical weld joints 20 at the end of cover plate 16, again with a relief 28 behind a weld flange 26 and weld joint 20 engaging flange 26 and tie plate 14. It should be noted that another weld flange 26 and a vertical weld joint 20 are located at the other end of cover plate 16, again with a relief 28 behind the weld flange 26 and weld joint 20.

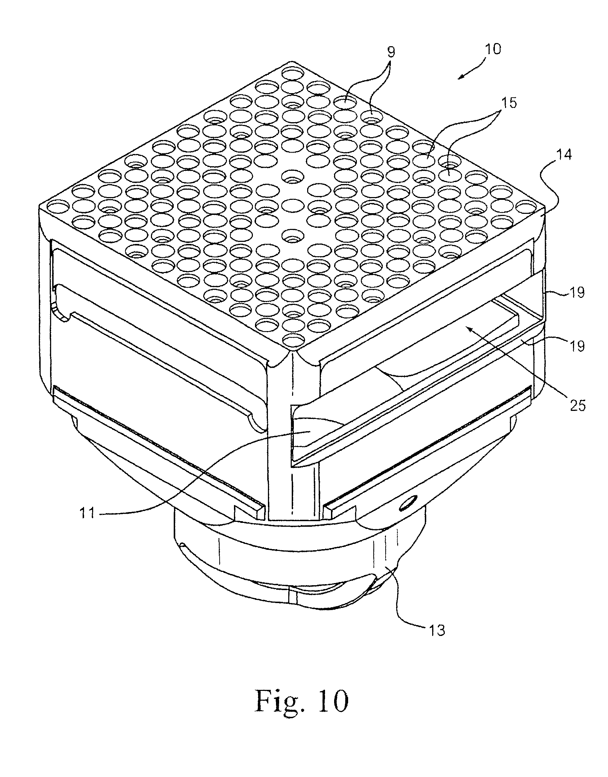

Figure 9A is a top rear perspective view of the cover plate 16 showing weld flanges 26, weld surfaces 29 and backside relief 28. Figure 9B is a bottom rear perspective view of the cover plate 16 also showing weld flanges 26, weld surfaces 29 and backside relief 28. Figure 10 is a perspective view of the Defender debris filter lower tie plate assembly 10, similar to Figure 1, but showing weld surfaces 19 in rectangular cavity/opening 11 through which filter plate assembly 12 is inserted into the lower tie plate 14. The weld surfaces 19 in rectangular cavity/ opening 11 are recessed surfaces engaged by the weld flanges 26 of cover plate 16 when cover plate 16 is inserted into cavity opening 11 and during the welding of cover plate 16 to lower tie plate 14.

The reliefs 28 behind the cover plate weld flanges 26, along with complete joint weld penetration are intended to eliminate any possibility of cervices at the interface between cover plate 16 and lower tie plate 14, and thereby, reduce stress corrosion cracking resulting from crevices in partial penetration welds that might otherwise occur in the laser welding process.

During the laser welding process of the present invention, the laser beam is applied symmetrically about a centerline between weld flanges 26 on cover plate 16 and lower tie plate 14 onto weld surfaces 29 on the cover plate 16 and weld surfaces 19 on the lower tie plate 14. The focused coherent laser energy between the cover plate weld flanges 26 and the lower tie plate 14 generates heat that is conducted into weld joints 20/21 formed between the cover plate 16 and the lower tie plate 14, causing the metal from which the plates are formed to change from a solid to a liquid, so as to combine the two separate liquid plate metals into one. After the two metals change back to a solid, the two plates 14 and 16 are welded together so as to form butt weld joints 20/21 between the two plates 14 and 16.

The present invention is also directed to the reduction of stress corrosion cracking resulting from crevices in partial penetration welds that might occur in a welding process. As noted above, complete joint weld penetration, along with reliefs 28 behind the cover plate weld flanges are intended to eliminate any possibility of cervices at the interface between the cover plate 16 and the lower tie plate 14.

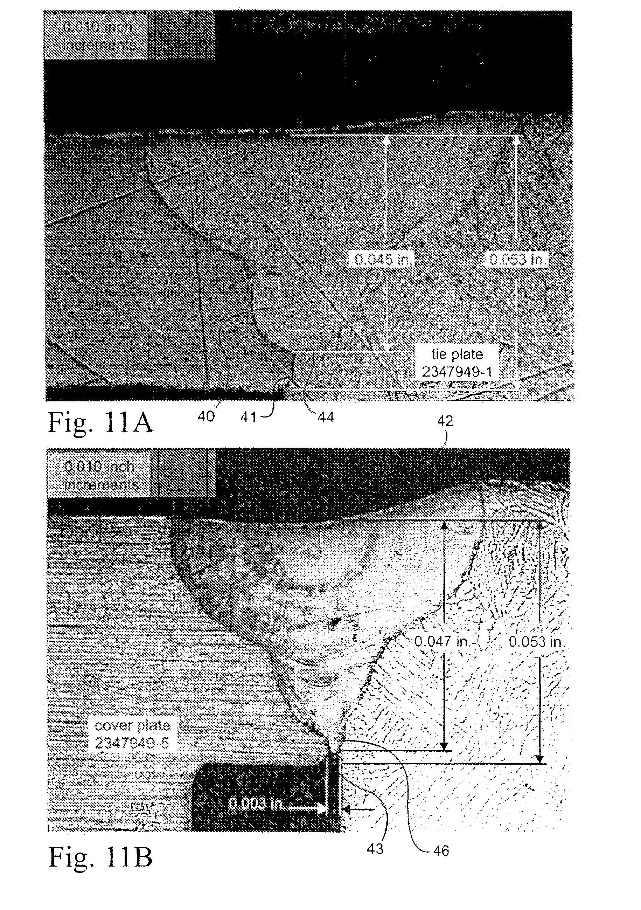

Partial penetration welds, such as welds 40 and 42 shown in Figures 11A and 11B, respectively, result in crevices 41 and 43 that increase the risk of stress corrosion cracking. Although the welding process of the present invention for joining the cover 16 and tie plate 14 is designed to result in full penetration welds, such penetration can be affected by mechanical loading on the welds 20 and 21 attaching cover plate 16 to lower tie plate 14. Direct forces on the cover welds come from compression of the filter plate assembly 12 during attachment of the cover plate 16 to the tie plate 14 and from the coolant pressure differential during operation of the debris filter lower tie plate assembly 10. The principal component of loading is the residual stress from shrinkage of the weld metal during solidification and cooling of the welds, combined with the stiffness of the cast cover plate 16 and tie plates 14. Full penetration joint welds avoid crevices at the weld roots 44 and 46, and, thereby, minimize the likelihood of stress corrosion cracking in creviced regions.

In a preferred embodiment of the debris filter lower tie plate assembly 10, the filter plate assembly 12 is constructed from an austenitic stainless steel. Preferably, the lower tie plate 14 is a solution annealed CF3 casting stainless steel. Preferably, the cover plate 16 and each of wavy stainless steel plates 18 forming the filter plate assembly 12 are made from solution annealed 316L stainless steel. Preferably, the lower tie plate 14 and cover plate 16 are machined after annealing without subsequent heat treatment. Preferably, the filter element 12 is re-annealed after assembly and welding of the wavy stainless steel plates 18 and before insertion of the filter plate assembly 12 into the lower tie plate 14.

Stress corrosion cracking is not an issue with respect to the lower tie plate 14, due to the material used in its construction, i.e., cast, low-carbon stainless steel. Similarly, crevice-induced stress corrosion cracking is not an issue with the filter element 12 due to the high rate of coolant flow through the Defender debris filter lower tie plate assembly 10. Crevice-induced stress corrosion is an issue in the cover plate 16 in the region of the laser welds 20 and 21 used to attach cover plate 16 to lower tie plate 14, if the welds are not full penetration welds that include crevices. The stress rule index, given in equation (1), provides a means for assessing the potential effect of weld crevices on the likelihood of stress corrosion cracking.

$$\frac{P_m + P_b}{S_y} + \frac{Q + F + R}{S_y + 0.002E} \le A \qquad (1)$$

where

A = 1.0 for cast austenitic stainless steel (*e.g.*, weld metal) and 0.7 for wrought 316L in a creviced condition,

$P_m$ = Primary membrane stress,

$P_b$ = Primary bending stress,

$S_y$ = Yield strength at temperature,

Q = Secondary stress

R = Residual stress,

E = Modulus of elasticity at temperature.

A lack of fusion at the weld roots 44 and 46 shown in Figures 11A and 11B is a structural discontinuity that increases the stress in the adjacent material. The severest case is shown in Figure 11A, where the cover and lower tie plates 16 and 14 connect with no discernible gap and no discernible radius at the tip of the unfused region. Stress concentration factors for such partially fused butt welds are given by the empirically based relationship given in equation (2).

$$(2) \qquad \frac{\sigma_{max}}{\sigma} = \max[c_0, c_1 + c_2 \, ( b/a )]$$

where

a = Non-fused (crack) length,

b =            Overall section width,

$c_0$          = 4.5 (minimum concentration factor for short cracks),

$c_1$          = 1.0,

$c_2$ =        14.7,

σ =           Average stress away from concentration,

$\sigma_{max}$ =      Maximum stress at concentration.

The stress concentration factors from equation (2) range from 4.5 to 8.3 for weld penetrations of slightly less than 100% to 50%, respectively. For reference, the stress concentration factor from elastic theory for the joint in Figure 11B is 3.6. The larger values given by equation (2) are a conservative approximation that eliminates the uncertainty of crack width and tip radius from stress calculations. The stress concentration factor is applied to both normal and shear loading of the welded joint.

The nature of the mechanical loading differs between the top and bottom welds 21 (horizontal) and end welds 20 (vertical) between plates 16 and 14. That is, the forces needed to satisfy equilibrium create primarily a shear stress in the horizontal welds 20 and a tensile stress in the vertical welds 21. In both types of welds, shrinkage during post-weld cooling creates primarily tensile stress in the weld material.

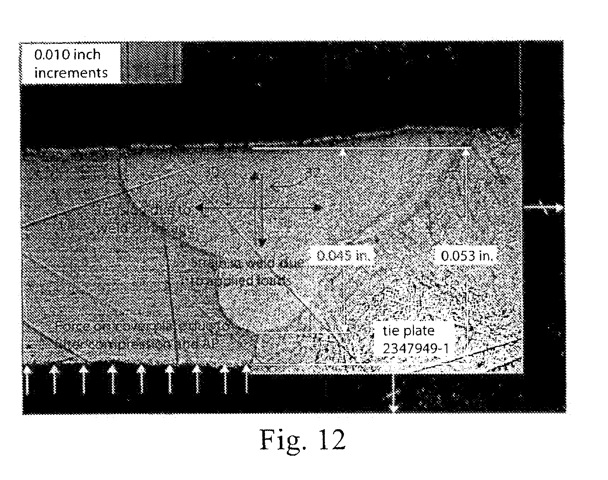

The resistive force of the filter plate assembly 12 against the welded cover plate 16 varies with component dimensions. It is measured during installation of the cover plate 16 and ranges from 30 lbs. to a maximum of 1,000 lbs. The upper end of this range leads to plastic deformation of the filter element 12 within the lower tie plate inner cavity 25. The coolant pressure difference between the fuel bundle inlet and the bypass region is approximately 10 psi. Residual welding stresses approach the yield strength of the cover plate 16 and tie plate 14 due to shrinkage of the weld metal during solidification of the weld joints and the geometry of the joints. The force due to compression of the filter element 12 and residual weld stresses relax during operation of the Defender debris filter lower tie plate assembly 10 due to thermal and irradiation-based processes. The force due to the coolant pressure differential varies with flow conditions during bundle operation, but remains throughout the operational life of the filter plate assembly 12, *i.e.*, in the range of 6-9 years. The loading and stresses in the weld joints 30 and 32 are shown schematically in Figure 12. These simplifications are consistent with the stress rule given in equation *(1),* i.e., partitioning the stress into primary and secondary components. The primary components are the stress resultants needed to satisfy force equilibrium and are affected by the joint geometry and the resulting stress concentration. The secondary components are the stresses that are self-relieving. The dominant secondary component results from weld shrinkage and the stiffness of the cover and tie plates 16 and 14. The secondary stress arises from shrinkage during cooling of the weld metal from the approximate mid-point to the annealing temperature range to room temperature, i.e., the cooling from 1070°C to 20°C. The resulting, average thermal strain in the weld metal is slightly greater than 2%, which is approximately 10 times the strain for the onset of plastic deformation. The residual stress in the weld at the completion of assembly operations is the average yield strength of 316L at room temperature, namely, 33.8 ksi.

The primary stress due to compression of the filter plate assembly 12 within the lower tie plate 14 and the residual welding stress relax due to thermal and irradiation effects. Thermal relaxation and relaxation due to the fast neutron flux in the region of the welds 20 and 21 reduces the stresses by additional amounts.

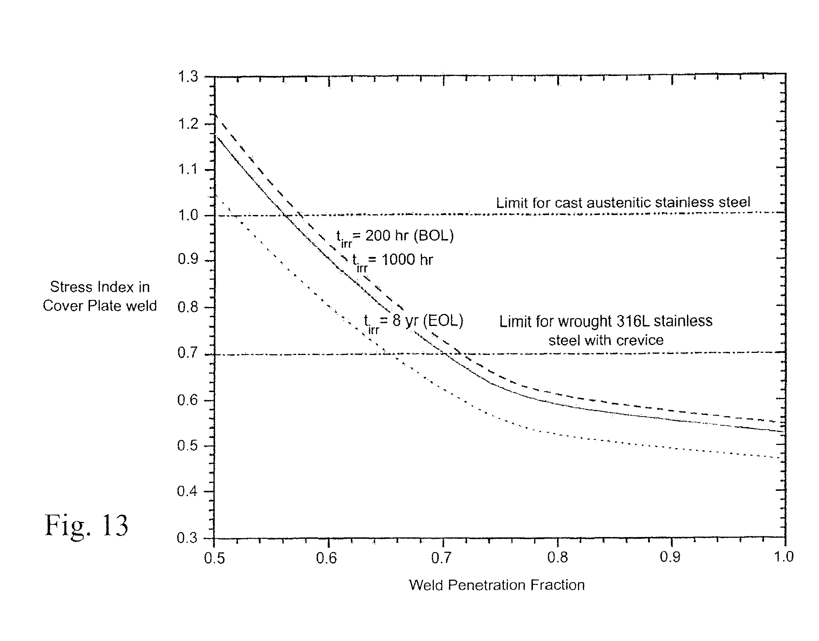

The calculated stress indices are shown relative to penetration and limiting values in Figure 13. Based on the stress relaxation during initial operation, weld penetration should be greater than or equal to 70% for the cover plate 16 adjacent to the weld. Although the weld metal is loaded directly based on the joint geometry shown in Figure 11A, the region at the edge of the weld has been found to undergo large plastic strains during welding and to be susceptible to stress corrosion cracking. Thus, it is preferred that partial fusion of the butt welds 20 and 21, which connect the cover plate 16 and lower tie plate 14 in the debris filter lower tie plate 10, will not affect the resistance of the weldment to stress corrosion cracking if the weld penetration is greater than or equal to 70% of the weld joint.

Figure 14 shows the laser welding used by the method of the present invention to weld the cover plate 16 to the lower tie plate 14. As shown in Figure 14, there is a laser beam 35 that is focused by a laser lens 33 to a focal point 34, which is followed by a defocal point 36. The laser beam is used with a power level that achieves a weld penetration greater than or equal to 70% of the weld joint. A focused beam 38 is used for horizontal weld joints 21 and a defocused beam 39 is used for vertical weld joints 20. The laser beam 35 is defocused 39 preferably on vertical sections.

The method of the present invention can be used to weld metal components other than the lower tie plate 14 and the cover plate 16 that are part of the Defender debris filter lower tie plate assembly 10. The thickness of the particular metal components to be welded together will affect the parameters selected for the operation of the laser welder. For weld joints of a given thickness, the power level, focal length and speed for the laser beam are preferably set to result in a laser beam power density and weld speed needed to achieve sufficient weld joint penetration to preclude crevice - induced stress corrosion cracking, while minimizing the distortion of the metal pieces to be welded together so as to be within final acceptance specifications, thereby requiring no post weld machining of the metal components to be considered a final product. The inert gas flow is set to maximize cooling and minimize weld oxidation. Preferably, there is no wire brushing of the weld after completion to comply with foreign material exclusion methods.

After completion of the welding, the fixture 74 holding the debris filter lower tie plate assembly 10 moves via CNC to an unload position, whereupon soot is vacuumed from the debris filter lower tie plate assembly 10 before it is removed from laser system 75. The debris filter lower tie plate assembly 10 is unloaded and wiped to remove excess soot with a clean wipe and filtered compressed air. A wire brush or other mechanically abrasive means are never used to clean the welds 20 and 21. Filtered compressed air is then blown through both ends of the tie plate 14 for at least 15 seconds and wiped clean with alcohol and a clean wipe.

In the welding process of the present invention, the Defender debris filter lower tie plate assembly 10 and the weld area is cleaned and bagged in a foreign material exclusion area.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

For completeness, various aspects of the invention are now set out in the following numbered clauses:

1. A method of welding together metal components, the method comprising the steps of:

   providing at least a first component of a first predetermined thickness to be welded,

   providing at least a second component with at least one flange of a second predetermined thickness for welding the second component to the first component,

   positioning the first component adjacent to the flange of the second component, whereby a relief is formed behind the at least one flange between the flange and the first component when the first component is positioned adjacent to the second component,

   providing a laser welder and positioning the laser welder's beam between the at least one weld flange of the second component and a side of the first component positioned adjacent to the at least one flange, and

   adjusting the laser beam's power level, focal length and speed to achieve during operation of the laser welder a laser beam power density and weld speed that minimizes heat input while forming a weldment between the first and second components with a penetration into a weld joint formed between the first and second components that is greater than or equal to a predetermined percentage of the joint so as to eliminate crevices in the weldment and thereby stress corrosion cracking of the weldment.

2. The method of clause 1, wherein the laser beam's power level, focal length and speed are adjusted to also maintain distortion of the first and second components at or below a specified distortion level, to thereby require no post weld machining of the first and second components.

3. The method of clause 1, wherein the predetermined percentage of the penetration of the weldment into the joint between the first and second components is greater than or equal to 70% of the joint.

4. The method of claim 1, wherein the distance of the laser beam lens from the first and second components is optimized to reduce oxidation of a surface of the weld between the first and second components.

5. The method of clause 1, wherein the second component includes a plurality of flanges for welding the second component to the first component, and wherein the second component is positioned adjacent to the first component, such that each of the plurality of weld flanges is adjacent to a separate side of the first component for welding.

6. The method of clause 2, wherein the focal length and thus the power density of the laser beam is set for a balance between achieving weld joint penetration that eliminates weldment crevices and thereby stress corrosion cracking of the weldment and maintaining the distortion of the first and second components at or below the specified distortion level.

7. The method of clause 1, wherein the laser beam is moved along between at least one flange of the second component and the side of the first component at a speed optimized for a balance between achieving weld joint penetration that eliminates weldment crevices and thereby stress corrosion cracking of the weldment and maintaining the distortion of the first and second components at or below the specified distortion level.

8. The method of clause 1, wherein the first component is positioned adjacent to the flange of the second component so as to achieve a specified maximum gap between the first component and the flange of the second component without creating significant distortion in the second component.

9. The method of clause 8, wherein the specified maximum gap between the first component and the flange of the second component is approximately 010".

10. The method of clause 1, wherein the first component has at least one recessed surface which is positioned behind the at least one flange of the second component, whereby the relief is formed between the at least one flange and the at least one recessed surface.

11. The method of clause 1, wherein the first and second components are cast metal.

12. The method of clause 1, wherein the first and second components are cast stainless steel.

13. The method of clause 1, wherein the laser welding is performed with an inert gas flow that is set to maximize cooling and minimize weld oxidation.

14. The method of clause 5, wherein the second component is fitted over an opening in the first component and the plurality of flanges for welding the second component to the first component are tack welded to the first component at at least two locations before the flanges of the second component are laser welded to the first component.

15. The method of clause 10, wherein the tack welds are made small enough to hold the first and second components together while they are laser welded, yet be fully consumed during the laser welding.

16. The method of clause 10, wherein the tack welds are made using tungsten inert gas welding.

17. A method of welding together metal components, the method comprising the steps of:

   providing a first cast metal component to be welded,

   providing a second cast metal component for welding to the first component.

   positioning the first component adjacent to the second component,

   providing a laser welder and positioning the laser welder's beam between the second component and the first component, and

   adjusting the laser beam's power level, focal length and speed to achieve during operation of the laser welder a laser beam power density and weld speed that minimizes heat input while forming a weldment between the first and second components with a penetration into a weld joint formed between the first and second components that is greater than or equal to a predetermined percentage of the joint so as to eliminate crevices in the weldment and thereby stress corrosion cracking of the weldment, and

wherein the laser beam's power level, focal length and speed are adjusted to also maintain distortion of the first and second components at or below a specified distortion level, to thereby require no post weld machining of the first and second components.

18. The method of clause 17, wherein the second component and the first component are tack welded together at at least two locations before the first and second components are laser welded together.

19. The method of clause 17, wherein the predetermined percentage of the penetration of the weldment into the joint between the first and second components is greater than or equal to 70% of the joint.

20. A method of welding together cast metal components, the method comprising the steps of:

providing at least a second cast metal component with a recessed welding surface,

providing at least a second cast metal component with a flange for welding the second component to the first component,

positioning the flange of the second component adjacent to the recessed welding surface of the first component, whereby a relief is formed behind the flange between the flange and the recessed welding surface,

providing a laser welder and positioning the laser welder's beam between the flange of the second component and a side of the first component positioned adjacent to the, and

adjusting the laser beam's power level, focal length and speed to achieve during operation of the laser welder a a laser beam power density and weld speed that minimized heat input while forming a weldment between the first and second components with a penetration into a weld joint forced between the first and second components that is greater than or equal to 70% of the joint so as to eliminate crevices in the weldment and thereby stress corrosion cracking of the weldment, and

wherein the laser beam's power level, focal length and speed are adjusted to also maintain distortion of the first and second component at or below a specified distortion level, to thereby require no post weld machining of the first and second components.

**Claims**

1.  A method of welding together metal components, the method comprising the steps of:

    providing at least a first component of a first predetermined thickness to be welded,
    providing at least a second component with at least one flange of a second predetermined thickness for welding the second component to the first component,
    positioning the first component adjacent to the flange of the second component, whereby a relief is formed behind the at least one flange between the flange and the first component when the first component is positioned adjacent to the second component,
    providing a laser welder and positioning the laser welder's beam between the at least one weld flange of the second component and a side of the first component positioned adjacent to the at least one flange, and
    adjusting the laser beam's power level, focal length and speed to achieve during operation of the laser welder a laser beam power density and weld speed that minimizes heat input while forming a weldment between the first and second components with a penetration into a weld joint formed between the first and second components that is greater than or equal to a predetermined percentage of the joint so as to eliminate crevices in the weldment and thereby stress corrosion cracking of the weldment.

2.  The method of claim 1, wherein the laser beam's power level, focal length and speed are adjusted to also maintain distortion of the first and second components at or below a specified distortion level, to thereby require no post weld machining of the first and second components.

3.  The method of claim 1 or claim 2, wherein the predetermined percentage of the penetration of the weldment into the joint between the first and second components is greater than or equal to 70% of the joint.

4.  The method of any of the preceding claims, wherein the distance of the laser beam lens from the first and second components is optimized to reduce oxidation of a surface of the weld between the first and second components.

5.  The method of any of the preceding claims, wherein the second component includes a plurality of flanges for welding the second component to the first component, and wherein the second component is positioned adjacent to the first component, such that each of the plurality of weld flanges is adjacent to a separate side of the first component for welding.

6.  The method of any of the preceding claims, wherein the focal length and thus the power density of the laser beam is set for a balance between achieving weld joint penetration that eliminates weldment crevices and thereby stress corrosion cracking of the weldment and maintaining the distortion of the first and second components at or below the specified distortion level.

7. The method of any of the preceding claims, wherein the laser beam is moved along between at least one flange of the second component and the side of the first component at a speed optimized for a balance between achieving weld joint penetration that eliminates weldment crevices and thereby stress corrosion cracking of the weldment and maintaining the distortion of the first and second components at or below the specified distortion level.

8. The method of any of the preceding claims, wherein the first component is positioned adjacent to the flange of the second component so as to achieve a specified maximum gap between the first component and the flange of the second component without creating significant distortion in the second component.

9. The method of any of the preceding claims, wherein the specified maximum gap between the first component and the flange of the second component is approximately 010".

10. The method of any of the preceding claims, wherein the first component has at least one recessed surface which is position behind the at least one flange of the second component, whereby the relief is formed between the at least one flange and the at least one recessed surface.

11. The method of claim 5, wherein the second component is fitted over an opening in the first component and the plurality of flanges for welding the second component to the first component are tack welded to the first component at at least two locations before the flanges of the second component are laser welded to the first component.

12. The method of claim 11, wherein the tack welds are made small enough to hold the first and second components together while they are laser welded, yet be fully consumed during the laser welding.

13. The method of claim 11 or 12, wherein the tack welds are made using tungsten insert gas welding.

14. A method of welding together metal components, the method comprising the steps of:

> providing a first cast metal component to be welded,
> providing a second cast metal component for welding to the first component,
> positioning the first component adjacent to the second component,
> providing a laser welder and positioning the laser welder's beam between the second component and the first component, and
> adjusting the laser beam's power level, focal length and speed to achieve during operation of the laser welder a laser beam power density and weld speed that minimizes heat input while forming a weldment between the first and second components with a penetration into a weld joint formed between the first and second components that is greater than or equal to a predetermined percentage of the joint so as to eliminate crevices in the weldment and thereby stress corrosion cracking of the weldment, and
> wherein the laser beam's power level, focal length and speed are adjusted to also maintain distortion of the first and second components at or below a specified distortion level, to thereby require no post weld machining of the first and second components.

15. The method of claim 14, wherein the second component and the first component are tack welded together at at least two locations before the first and second components are laser welded together.

Fig. 1

EP 2 065 118 A1

Fig. 2

**Fig. 3**

Tack Welds

"Z" axis

60

57

55

60

"Y" axis

56

62

48

25

47

54

14

49

45

53

58

51

23

49

10

52

50

61

61

63

64

Fig. 4

Fig. 5A

Fig. 5B

Fig. 6

Fig. 7

Fig. 8A

Fig. 8B

Weld Surface          Weld Relief

29   28   26   29

28   16   37   26

## Fig. 9A

Weld Surface          Weld Relief

29   28   26   29

28   16   37   26

## Fig. 9B

Fig. 10

Fig. 11A

Fig. 11B

Fig. 12

Fig. 13

Fig. 14

EP 2 065 118 A1

**EUROPEAN SEARCH REPORT**

Application Number

EP 08 17 0082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 634 577 A (ANSALDO SPA [IT]) 26 January 1990 (1990-01-26)  * the whole document * ----- | 1-4, 6-10,14, 15 | INV. B23K26/32 B23K33/00  ADD. B23K103/04 B23K103/06 |
| X | EP 1 719 572 A (BAYERISCHE MOTOREN WERKE AG [DE]) 8 November 2006 (2006-11-08) * the whole document * ----- | 1-4, 6-10,14 | |
| X | US 5 498 849 A (ISSHIKI OSAMU [JP] ET AL) 12 March 1996 (1996-03-12) | 1-9,14 | |
| A | * the whole document * ----- | 11-13,15 | |
| X | US 5 511 949 A (THORE MONIQUE A [FR]) 30 April 1996 (1996-04-30) * the whole document * ----- | 1-9,11, 12,14,15 | |

**TECHNICAL FIELDS SEARCHED (IPC)**

B23K

The present search report has been drawn up for all claims

| Place of search | Date of completion of the search | Examiner |
|---|---|---|
| The Hague | 17 March 2009 | Aran, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 17 0082

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2009

| Patent document cited in search report | | Publication date | Patent family member(s) | Publication date |
|---|---|---|---|---|
| FR 2634577 | A | 26-01-1990 | DE 3924235 A1<br>GB 2222301 A<br>IT 1225672 B<br>US 5132078 A | 25-01-1990<br>28-02-1990<br>22-11-1990<br>21-07-1992 |
| EP 1719572 | A | 08-11-2006 | DE 102005023230 A1 | 09-11-2006 |
| US 5498849 | A | 12-03-1996 | NONE | |
| US 5511949 | A | 30-04-1996 | NONE | |

EPO FORM P0459

For more details about this annex : see Official Journal of the European Patent Office, No. 12/82